# EUROPEAN PATENT SPECIFICATION

(11) **EP 1 997 933 B1**
(45) Date of publication and mention of the grant of the patent: **12.10.2011**
(21) Application number: 08251859.8
(22) Date of filing: 29.05.2008
(51) Int. Cl.: C23C 18/16, C23C 18/18, C23C 18/31, C23C 18/48, C25D 7/04, C25D 17/16, H01M 2/02, B08B 9/08, B08B 9/42

(54) **Plating method of electrode can of flat alkaline cell and plating apparatus thereof**
Plattierungsverfahren für die Elektrodenbüchse einer Alkali-Flachbatterie und Plattierungsgerät dafür
Procédé de placage de bac d'électrode d'une pile alcaline plate et appareil de placage correspondant

(30) Priority: 29.05.2007 JP 2007142557
(43) Date of publication of application: 03.12.2008
(73) Proprietor: Seiko Instruments Inc., Chiba-shi, Chiba (JP)
(72) Inventor: Yamaguchi, Norishige, Chiba-shi, Chiba (JP)
(74) Representative: Cloughley, Peter Andrew

(56) References cited:
- DE-C1- 4 330 346
- JP-A- 55 050 570
- JP-A- 55 050 571
- JP-A- 59 216 654
- US-A- 5 814 419
- US-A1- 2006 118 411
- US-A1- 2006 127 758

## Description

The present invention relates to a plating method of an electrode can of a flat alkaline cell, and a plating apparatus thereof.

As an example of flat alkaline cells, a flat alkaline cell used for a small electronic device such as watch has positive and negative electrode cans, and an open end of the positive electrode can is closed by the negative electrode can with a gasket between them. In the negative electrode can, a folding-back portion, which is folded back into a horseshoe-shaped section along an outer circumferential face, and a folding-back bottom are formed at an open end of the can, and the can is clamped by an inner circumferential face of an open edge of the positive electrode can with the gasket between the cans so as to be hermetically held.

The negative electrode can includes a three-layer clad material of a nickel layer (outer surface layer) including nickel, a stainless steel layer (metal layer) including stainless steel, and a collector layer including copper, the clad material being pressed into a cup shape.

In the positive electrode can, a positive electrode is accommodated. In the negative electrode can, a negative electrode is disposed oppositely to the positive electrode with a separator between them, the negative electrode including zinc or zinc-alloy powder containing no mercury as a negative electrode active-material, and an alkaline electrolyte is filled.

The negative electrode is designed such that zinc amalgam of zinc or zinc-alloy powder amalgamated with mercury is used, which inhibits generation of hydrogen gas (H₂) from zinc or zinc-alloy powder, in addition, inhibits generation of hydrogen gas (H₂) from the collector layer due to contact of the zinc or zinc-alloy powder to copper of the collector layer of the negative electrode can via the alkaline electrolyte.

Such a reaction of the hydrogen gas generation is caused by dissolution of the zinc or zinc-alloy powder into the alkaline electrolyte, in which zinc is oxidized and changed into zinc oxide.

On the contrary, as described above, when zinc amalgam being amalgamated with mercury is used, hydrogen generation can be inhibited, and consequently an effect of suppressing swell of a cell can be obtained in each case.

However, recently, in the light of the environmental issue, even in the flat alkaline cells, use of mercury is in a state of being avoided to the utmost, and many studies have been made to avoid use of mercury.

To effectively inhibit generation of the hydrogen gas, a method is proposed, in which a coating layer is deposited, the coating layer including tin as a metal having a high hydrogen overvoltage compared with copper of the collector. The coating layer is formed by depositing the tin by electroless plating, electroplating or the like.

Furthermore, a method is proposed, in which a copper surface of a negative electrode can is entirely deposited with tin by a plating method, then the can is subjected to heat treatment for 2 min or more at 120°C to 180°C, thereby a copper-tin diffusion alloy layer is formed by at least 30% of thickness of tin plating.

In the flat alkaline cells, generation of hydrogen gas has not been perfectly prevented. This is due to a problem that when a negative electrode can is molded by pressing, an impurity from a die or the like is adhered to a copper surface of the negative electrode can, or a pinhole, a crack or the like is induced in the coating layer, so that the collector layer is exposed, leading to generation of hydrogen gas. Therefore, when a clad material is used for a negative electrode can, since the can is produced by pressing, an impurity may be highly possibly adhered on a copper surface. When the impurity is adhered, a defect may be induced in the coating layer, leading to generation of the hydrogen gas.

The coating layer provided on the negative electrode can is extremely thin, typically 5 µm or less, and is formed by electroplating, electroless plating or the like. Therefore, a defect such as pinhole or crack tends to occur. As a result, when a pinhole, crack or the like exists in the coating layer, hydrogen may be generated from such a defective portion, resulting in reduction in capacity storage, reduction in liquid leakage resistance, swell of a cell can, or the like.

In the method of forming the copper-tin diffusion alloy layer by performing heat treatment of the coating layer, while the diffusion alloy layer is grown, since heat treatment temperature is lower than the melting point of tin, 120°C to 180°C, when a pinhole, a crack or the like exists in the copper plating layer, which is a main cause of generation of hydrogen gas, such a defect in the tin plating layer cannot be repaired.

Thus, it can be considered that before the collector layer is formed, a two-layer clad material of a nickel layer including nickel, and a stainless steel layer including stainless steel is pressed into a cup shape, then the collector layer and the plated-coating layer are formed by plating method.

However, since the plating must be performed only within a concave of the negative electrode can pressed into a cup shape, negative electrode cans, each having a small size, cannot be efficiently massively plated.

JP 55-050570 discloses a metal plating method for the inside of a battery case in which the battery case is soaked in an oscillation medium in a tank through an opening provided on a cover, when the case is filled with plating solution. A DC voltage is applied to a carbon electrode and a cathode, simultaneously the oscillation medium is agitated with an ultrasonic wave oscillator provided on the inside of the bottom of the tank. Thus the plating solution in the case is forcedly agitated to prevent sedimentation of conductive particles of graphite powder, and a plating layer and conductive particles are deposited on the surface of the case.

JP 55-050571 discloses a metal plating method for the inside of a battery case in which a voltage is applied to an anode and a cathode, and simultaneously a pump and an agitator are operated. Thus a plating solution in a plating solution stock tank is agitated forcedly with the agitator and fed to an electrode violently through a flow regulator with the pump, the plating solution is dispersed on the inside surface of the case without splashing against the inside of the bottom of the case by a dispersing hole provided on the side surface of the electrode and a flange of a bottom plate. A circulating hole of a regulating plate is regulated so that plating solution is filled in the case.

DE 4330346 discloses a device for anodic oxidation of work-pieces having a wear face located in a recess in the work-piece, having a container for holding an aqueous electrolyte, having a support with holder devices for holding a plurality of work-pieces, and having means for introducing the support into the container or withdrawing it from the container. The support is designed such that it holds the work-pieces in uniform predetermined arrangement with the recess open upwards. At least one anode and cathode are provided for each work-piece, which anode and cathode can be raised and lowered independently of the support so that they can, after the support has been introduced into the container, be presented to the work-pieces in fixed arrangement. An electrolyte supply line dipping into the respective recess in the work-piece is assigned to each cathode, so that the recess can be selectively anodically oxidised.

US 5,814,419 discloses a method in which the performance characteristics of alkaline manganese dioxide cells are improved by applying a thin, polymeric coating to the inner surface of an unplated steel positive current collector, and treating the current collector with an aqueous solution of sodium silicate before or after the coating is applied to the inner surface. Silicic acid may also be added to the coating before its application to the inner surface of the current collector. In either embodiment disclosed, sodium silicate or silicic acid may also be added to the cathode mixture. The polymeric coating comprises, in combination, a first film forming binder component and a second component comprising an electrically conductive component such as carbon or a filler. The combination of the coating and the sodium silicate or silicic acid treatment of the current collector may be used on unplated steel.

The invention was made to solve the problem, and an object of the invention is to provide a method of plating an electrode can of a flat alkaline cell, by which a plated-coating layer can be formed only in a concave of an electrode can, a plating liquid is not uselessly consumed, and the concave of the electrode-can can be washed with a small amount of washing liquid.

A first aspect of the present invention is set out in claim 1.

A second aspect of the invention is set out in claim 5.

According to the first aspect of the present invention, a surface of the concave is chemically polished in the etching step, so that impurities, which are adhered on the surface when the clad material as a material of the negative electrode can is produced by rolling, or impurities from a die or the like, which are adhered on the negative electrode can when the negative electrode can is molded by pressing, are removed, thereby defects in the plated-coating layer such as a pinhole or crack caused by adhesion of the impurities are prevented, consequently a plated-coating layer having few defects can be formed. Moreover, a surface of the concave, from which impurities have been removed in the etching step, is modified for forming a uniform plated-coating layer in a subsequent step (plating step). Furthermore, in the plating step, after the plating liquid filled in the concave is recovered, the concave is washed, therefore the plating liquid is not diluted by the washing liquid. Consequently, when the plating liquid is reused, reduction in tightness of a plated-coating layer on an uppermost layer is prevented, the reduction being caused by a phenomenon that the plated-coating layer on the uppermost layer is plated by such a diluted plating liquid. Furthermore, in the plating step, since recovery of the washing liquid and drying are promptly performed after performing washing, liquid stain or the like does not occur in the plated-coating layer.

According to the embodiment of claim 3, impurities adhered on the collector layer including copper on the concave of the negative electrode can are removed in the etching step. Furthermore, the surface of the collector layer including copper can be made into a state at which plating is facilitate (for example, state of Cu⁺ (monovalent copper ion)) in the surface modification step, consequently a uniform plated-coating layer having no defect can be formed.

According to the embodiment of claim 2, the collector layer including copper on the concave of the negative electrode can is chemically polished by an acid, so that impurities adhered on the collector layer are removed.

According to the embodiment of claim 4, since the plated-coating layer including Sn or indium being a metal having a high hydrogen overvoltage compared with copper is formed on the collector layer including copper formed on the concave of the negative electrode can, generation of hydrogen gas is inhibited, the hydrogen gas generation being caused by contact of zinc as the negative electrode active-material to the collector layer of the negative electrode can.

According to the second aspect of the present invention, since a plurality of dispensers are used to fill the plating liquid into respective concave of corresponding negative electrode cans disposed in respective pockets of the tray, a large number of negative electrode cans can be made to have a plated-coating layer formed only in the concave respectively, in addition, decrease in plating liquid consumption can be achieved.

Since a plurality of dispensers are used to fill the etchant into respective concave of corresponding negative electrode cans disposed in respective pockets of a tray, a large number of negative electrode cans can be chemically polished only in the concave thereof, in addition, decrease in etchant consumption can be achieved.

Since a plurality of dispensers are used to fill the surface modification liquid into respective concave of corresponding negative electrode cans disposed in respective pockets of a tray, a large number of negative electrode cans can be subjected to surface modification only in the concave thereof, in addition, decrease in consumption of the surface modification liquid can be achieved.

Since a plurality of dispensers are used to fill the washing liquid into respective concave of corresponding negative electrode cans disposed in respective pockets of a tray, a large number of negative electrode cans can be washed only in the concave thereof, in addition, decrease in washing liquid consumption can be achieved.

Embodiments of the present invention will now be described by way of further example only and with reference to the accompanying drawings, in which:
Fig. 1 shows a schematic section diagram of an alkaline cell of the embodiment;
Fig. 2 shows a section diagram for illustrating a structure of a negative electrode can;
Figs. 3A to 3F show explanatory diagrams showing a method of forming a plated-coating layer to be formed on the negative electrode can, the diagrams illustrating an etching step;
Figs. 4A to 4E show explanatory diagrams showing the method of forming the plated-coating layer to be formed on the negative electrode can, the diagrams illustrating a surface modification step;
Figs. 5A to 5E show explanatory diagrams showing the method of forming the plated-coating layer to be formed on the negative electrode can, the diagrams illustrating an electroless plating step;
Fig. 6 shows a plane diagram showing a schematic configuration of a plated-coating-layer formation apparatus;
Fig. 7 shows a perspective diagram of a tray;
Fig. 8 shows a section diagram for illustrating a negative electrode can disposed in a pocket provided on the tray;
Fig. 9 shows a relevant part, general, perspective diagram showing an etchant filling device and an etchant recovery device;
Fig. 10 shows a section diagram for illustrating a condition that an etchant is filled from a dispenser of the etchant filling device into a concave of a negative electrode can;
Fig. 11 shows a section diagram for illustrating a condition that an etchant is aspirated from the concave of the negative electrode can by an aspirating nozzle of the etchant recovery device; and
Fig. 12 shows a perspective diagram for illustrating another etchant filling device.

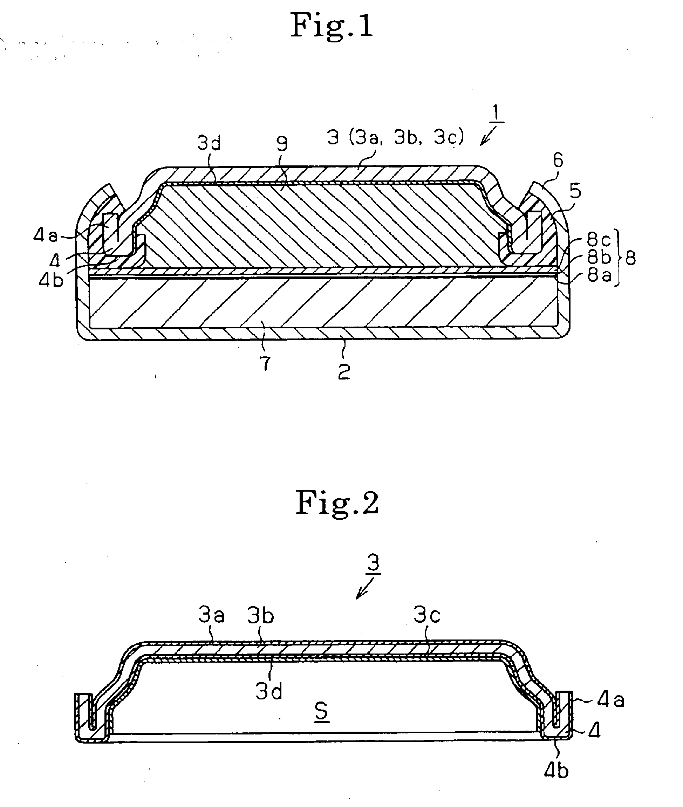

Hereinafter, a specified embodiment of the invention will be described according to drawings. Fig. 1 shows a schematic section diagram of a primary, alkaline cell of a button (flat) type. In Fig. 1, a primary alkaline cell 1 is a button primary cell, and has a positive electrode can 2 in a bottomed cylinder shape and a negative electrode can 3 in a capped cylinder shape. The positive electrode can 2 as an electrode can is in a configuration where a steel sheet is subjected to nickel plating, and combined with a positive electrode terminal.

On the other hand, in the negative electrode can 3 as the electrode can, a folding-back portion 4 opened in a circular shape is formed, and the folding-back portion 4 is attached with a gasket 5, for example, in a nylon ring shape. The negative electrode can 3 is fitted into a circular opening 6 of the positive electrode can 2 from a side of the folding-back portion 4 attached with the gasket 5, then the opening 6 of the positive electrode can 2 is caulked to the gasket 5 so as to be closed, so that the positive electrode can 2 and the negative electrode can 3 are connectively fixed to each other. The positive electrode can 2 and the negative electrode can 3 are connectively fixed to each other, thereby an enclosed space is formed between the positive electrode can 2 and the negative electrode can 3 with the gasket 5 between them.

As shown in Fig. 2, the negative electrode can 3 includes a three-layer clad material of an outer surface layer 3a including nickel, a metal layer 3b including stainless steel (SUS), and a collector layer 3c including copper, wherein the clad material is pressed into a cup shape with the collector layer 3c being set at an inner side, then a plated-coating layer 3d is formed on an inner surface of a cup (concave S), namely, on the collector layer 3c.

In the embodiment, the plated-coating layer 3d includes tin, and is formed in an inner surface region of the negative electrode can 3. Here, the inner surface region is a region of the concave S of the negative electrode can 3 (corresponding to a side to be contacted to an alkaline electrolyte as described later), which corresponds to a region inside the folding-back bottom 4b situated inside a folding-back strip 4a of the folding-back portion 4.

That is, in the embodiment, the plated-coating layer 3d (tin coating layer) is not formed on the folding-back strip 4a to be contacted to the gasket 5 and the folding-back bottom 4b, so that creeping up of the alkaline electrolyte due to a creep phenomenon is prevented, leading to improvement in liquid leakage resistance. The reason for this is that the alkaline electrolyte easily creeps up on the plated-coating layer 3d (tin coating layer) compared with on the collector layer 3c.

In the closed space formed between the positive electrode can 2 and the negative electrode can 3 with the gasket 5 between them, a positive electrode mixture 7, separator 8, and negative electrode mixture 9 are accommodated, and the positive electrode mixture 7 is disposed in an accommodative manner at a side of the positive electrode can 2, and the negative electrode mixture 9 is disposed in an accommodative manner at a side of the negative electrode can 3 while the separator 8 is inserted between the mixtures. The alkaline electrolyte is filled in the closed space.

To describe in detail., the positive electrode mixture 7 is provided on a bottom of the positive electrode can 2. The positive electrode mixture 7 has a structure of a cylindrical pellet formed in a way that nickel oxyhydroxide powder as a positive electrode active-material, graphite as a conductive agent, poly-sodium-acrylate as a binder, and a potassium hydroxide solution as an alkaline electrolyte are mixed, then such a mixture is molded by pressing by a tableting machine or the like. While nickel oxyhydroxide is used as the positive electrode active-material in the embodiment, silver oxide, manganese dioxide, a composite compound of nickel and silver and the like can be used, but they are not restrictively used.

The negative electrode mixture 9 is disposed at an upper side of the separator 8. The negative electrode mixture 9 is in a gel shape including zinc powder or zinc alloy powder as a negative electrode active-material without containing mercury, that is, containing no mercury, an alkaline electrolyte, a thickener and the like, and is attached by pressure to a bottom of the negative electrode can 3 so as to be accommodated in an upper side of the separator 8.

The separator 8 is disposed between the positive electrode mixture 7 and the negative electrode mixture 9. In the embodiment, the separator 8 is, for example, in a three-layer structure of nonwoven cloth 8a, cellophane 8b, and a film of polyethylene 8c being graft-polymerized. The separator 8 is impregnated with the alkaline electrolyte.

As the alkaline electrolyte, for example, a sodium hydroxide solution, a potassium hydroxide solution, or a mixed solution of the sodium hydroxide solution and the potassium hydroxide solution can be used.

In this way, the plated-coating layer 3d, which includes tin being a metal having a high hydrogen overvoltage compared with copper, is formed on a surface of the collector layer 3c that corresponds to a compression recess S (inner surface region) of the negative electrode can 3 and includes copper, therefore generation of hydrogen gas is inhibited, the hydrogen gas generation being caused by contact of the zinc as the negative electrode active-material to the collector layer 3c of the negative electrode can 3.

While the plated-coating layer 3d includes tin in the embodiment, the plated-coating layer 3d may include indium. This is because indium easily forms a uniform and tight plated-coating layer 3d on a copper surface as in the case of tin, and indium is a metal having a high hydrogen overvoltage compared with copper. It is appreciated that a plated-coating layer 3d including tin and indium may be formed.

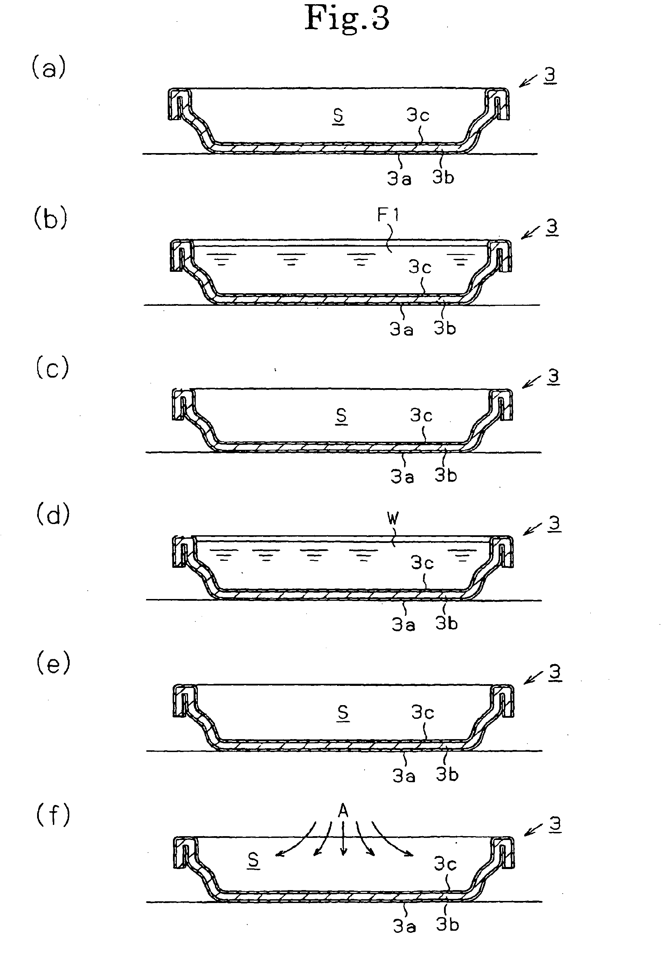

Next, description is made according to Figs. 3 to 5 of a method of forming the plated-coating layer 3d (tin coating layer) formed in the compression recess S of the negative electrode can 3 as shown in Fig. 2.

As shown in Fig. 3A, the negative electrode can 3 being pressed into a cup shape before forming the plated-coating layer 3d (tin coating layer) is disposed such that the folding-back portion 4 (concave S) opened in a circular shape is directed upward. Then, the negative electrode can 3 is first subjected to an etching step.

### (Etching step)

(1) As shown in Fig. 3B, an etchant F1 containing 8% sulfuric acid in a concentration of 98% and a 8% hydrogen peroxide solution in a concentration of 35% is filled into the concave S of the cup-shaped negative-electrode can 3 before forming the plated-coating layer 3d (tin coating layer) by a filling device such as dispenser (etchant filling step). By filling the etchant F1, the collector layer 3c including copper, which is formed in the concave S of the negative electrode can 3, is chemically polished, that is, subjected to surface treatment. Thus, impurities adhered on a surface of the collector layer 3c are removed, and scratches and the like formed on the surface are eliminated, consequently the surface of the collector layer 3c becomes flat.

The etchant F1 preferably contains at least one acid. This is because impurities, which are adhered on a copper surface when a clad material as a material of the negative electrode can 3 is produced by rolling, or impurities, which are adhered on the copper surface of the negative electrode can 3 from a die or the like when the negative electrode can 3 is molded by pressing, can be removed by a chemical polishing effect given by the acid.

(2) When chemical polishing treatment of the surface is completed by using the etchant F1, as shown in Fig. 3C, the etchant F1 is aspirated to be removed (recovered) from the concave S of the negative electrode can 3 by an aspirating device such as an aspirating nozzle (etchant recovery step).

(3) When the etchant F1 is recovered, as shown in Fig. 3D, a washing liquid W including pure water is filled into the concave S of the negative electrode can 3 by a dispenser or the like, so that the inside of the concave S of the negative electrode can 3 is washed (washing step). This is performed to perfectly remove the etchant F1 by washing using the washing liquid W so as to prevent a phenomenon that the residue of the etchant F1 reacts with a conductive polymer liquid F2 in a subsequent step, leading to reduction in quality of the plated-coating layer 3d,.

(4) When washing is completed by using the washing liquid W, as shown in Fig. 3E, the washing liquid W is aspirated to be removed (drained) from the concave S of the negative electrode can 3 by an aspirating nozzle or the like (washing liquid recovery step).

(5) When the washing liquid W is completely drained from the concave S of the negative electrode can 3, as shown in Fig. 3F, air A is blown into the concave S of the negative electrode can 3 by a dispenser or the like (drying step). Thus, the inside of the concave S of the negative electrode can 3 is dried by the air A. The draining and the drying are performed to prevent a phenomenon that the conductive polymer liquid F2 is diluted by the residual water in the subsequent step, leading to reduction in surface modification.

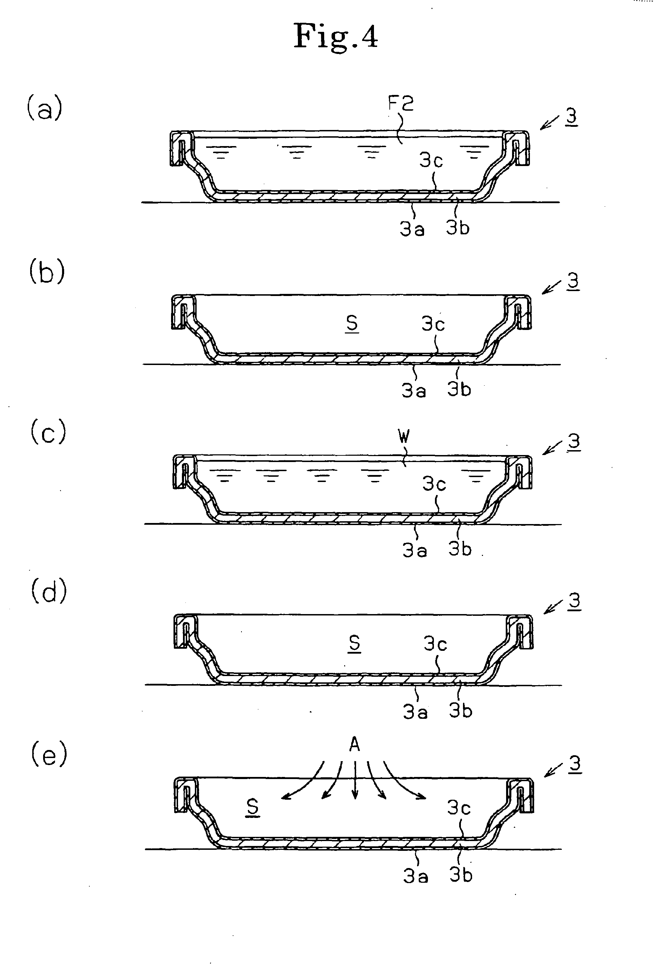

When drying of the inside of the concave S of the negative electrode can 3 is completed, the etching step is finished, and then a surface modification step as shown in Figs. 4A to 4E is performed.

### (Surface modification step)

(1) When the inside of the concave S of the negative electrode can 3 is dried, as shown in Fig. 4A, the conductive polymer liquid F2 such as polyamine as a surface modification liquid is filled into the concave S of the negative electrode can 3 by a filling device such as dispenser (surface-modification-liquid filling step). By filling the conductive polymer liquid F2, the collector layer 3c including copper, which has been formed in the concave S of the negative electrode can 3, is subjected to surface treatment. Thus, a surface of the collector layer 3c is modified.

That is, a state of the surface of the collector layer 3c including copper is changed by the conductive polymer liquid from a state that Cu⁺ ions (monovalent copper ions) and Cu²⁺ ions (bivalent copper ions) randomly exist to a state that only the Cu⁺ ions (monovalent copper ions) exist.

(2) When surface treatment is completed by using the conductive polymer liquid F2, as shown in Fig. 4B, the conductive polymer liquid F2 is aspirated to be removed (recovered) from the concave S of the negative electrode can 3 by an aspirating device such as aspirating nozzle (surface-modification-liquid recovery step).

(3) When the conductive polymer liquid F2 is recovered, as shown in Fig. 4C, a washing liquid W including pure water is filled into the concave S of the negative electrode can 3 by a dispenser or the like, so that the inside of the concave S of the negative electrode can 3 is washed (washing step). This is performed to perfectly remove the conductive polymer liquid F2 by washing using the washing liquid W so as to prevent a phenomenon that the residue of the conductive polymer liquid F2 reacts with an electroless plating liquid F3 in a subsequent step, leading to reduction in quality of the plated-coating layer 3d.

(4) When washing is completed by using the washing liquid W, as shown in Fig. 4D, the washing liquid W is aspirated to be removed (drained) from the concave S of the negative electrode can 3 by an aspirating nozzle or the like (washing liquid recovery step).

(5) When the washing liquid W is completely drained from the concave S of the negative electrode can 3, as shown in Fig. 4E, air A is blown into the concave S of the negative electrode can 3 by a dispenser or the like (drying step). Thus, the inside of the concave S of the negative electrode can 3 is dried by the air A.

The draining and the drying are performed to prevent a phenomenon that the plating liquid F3 is diluted by the residual water in the subsequent step, leading to reduction in quality of the plated-coating layer 3d.

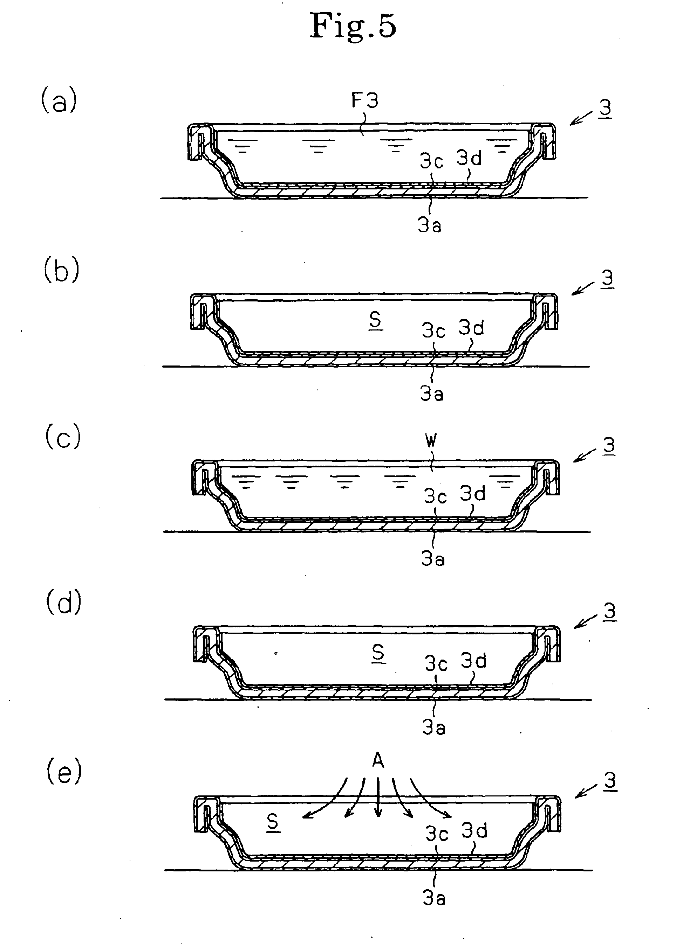

When the inside of the concave S of the negative electrode can 3 is dried, the surface modification step is finished, and then an electroless plating step as shown in Figs. 5A to 5E is performed.

### (Electroless plating step)

(1) When the inside of the concave S of the negative electrode can 3 is dried, as shown in Fig. 5A, the electroless plating liquid F3 containing tin is filled into the concave S of the negative electrode can 3 by a filling device such as dispenser (plating liquid filling step). Thus, a uniform and tight plated-coating layer 3d including tin is formed on the surface (copper surface) of the collector layer 3c by tin in the electroless plating liquid F3.

While an electroless plating liquid F3 containing tin is used as the electroless plating liquid F3 in the embodiment, an electroless plating liquid containing indium is used in the case of plated-coating layer 3d including indium.

(2) When the plated-coating layer 3d is formed in the concave S of the negative electrode can 3, as shown in Fig. 5B, the electroless plating liquid F3 is aspirated to be removed (recovered) from the concave S of the negative electrode can 3 by an aspirating device such as aspirating nozzle (plating liquid recovery step). If a plating liquid F3 is not recovered, the plating liquid F3 is diluted by the washing liquid W during washing in a subsequent step, and an uppermost surface is plated by such a diluted plating liquid F3, resulting in reduction in tightness of the plated-coating layer 3d in the uppermost surface.

(3) When the electroless plating liquid F3 is recovered from the concave S of the negative electrode can 3 by a dispenser or the like, as shown in Fig. 5C, a washing liquid W including pure water is filled into the concave S of the negative electrode can 3 by a dispenser or the like (washing step). Thus, the inside of the concave S of the negative electrode can 3 is washed by the washing liquid W. If washing is not performed, concentration of the plating liquid F3 is increased compared with an appropriate concentration through evaporation of water from the plating liquid F3, resulting in reduction in uniformity and tightness of the plated-coating layer 3d.

(4) When the inside of the concave S of the negative electrode can 3 is completely washed by using the washing liquid W, as shown in Fig. 5D, the washing liquid W is aspirated to be removed (drained) from the concave S of the negative electrode can 3 by an aspirating nozzle or the like (draining step).

(5) When the washing liquid W is completely drained from the concave S of the negative electrode can 3, as shown in Fig. 5E, air A is blown into the concave S of the negative electrode can 3 by a dispenser or the like. This is performed to dry the inside of the concave S of the negative electrode can 3 by the air A, and draining and drying are promptly performed after such washing so as to prevent a possibility of a bad effect such as water stain occurring in the plated-coating layer 3d.

The etching step, surface modification step, and electroless plating step are performed as hereinbefore, thereby a uniform and tight, plated-coating layer 3d can be easily formed on the surface of the collector layer 3c including copper, which corresponds to the surface of the concave S of the negative electrode can 3.

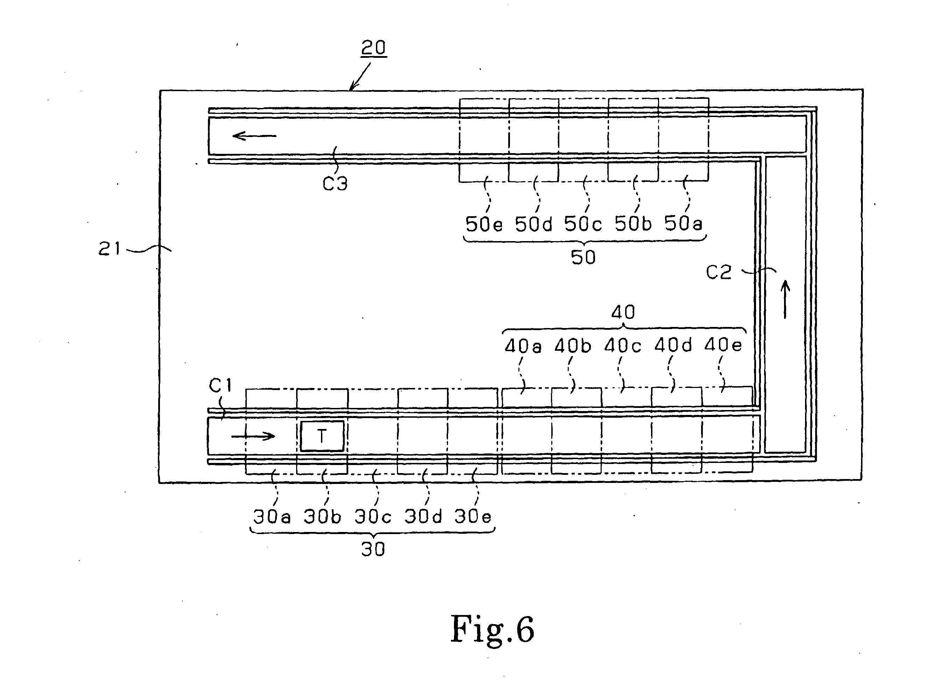

Next, description is made according to Figs. 6 to 11 on a plated-coating-layer formation apparatus for forming the plated-coating layer 3d in the concave S of the negative electrode can 3.

Fig. 6 shows a schematic plane diagram showing a schematic configuration of a plated-coating-layer formation apparatus 20 having first to third conveyers C1, C2 and C3 on a top of a base 21. The first conveyer C1 is provided along a front side of the base 21, the second conveyer C2 is provided along a right side of the base 21, and the third conveyer C3 is provided along a back side of the base 21.

The first to third conveyers C1, C2 and C3 convey trays T, each tray having a plurality of negative electrode cans 3 set thereon, in an arrow direction respectively. To describe in detail, a tray T is placed on a left end (supply portion) of the first conveyer C1, and conveyed to a right end of the first conveyer C1. The tray T is transferred from the right end of the first conveyer C1 to a front end of the second conveyer C2, then conveyed to a rear end of the second conveyer C2. Then, the tray T is transferred from the rear end of the second conveyer C2 to a right end of the third conveyer C3, and then conveyed to a left end (recovery section) of the third conveyer C3.

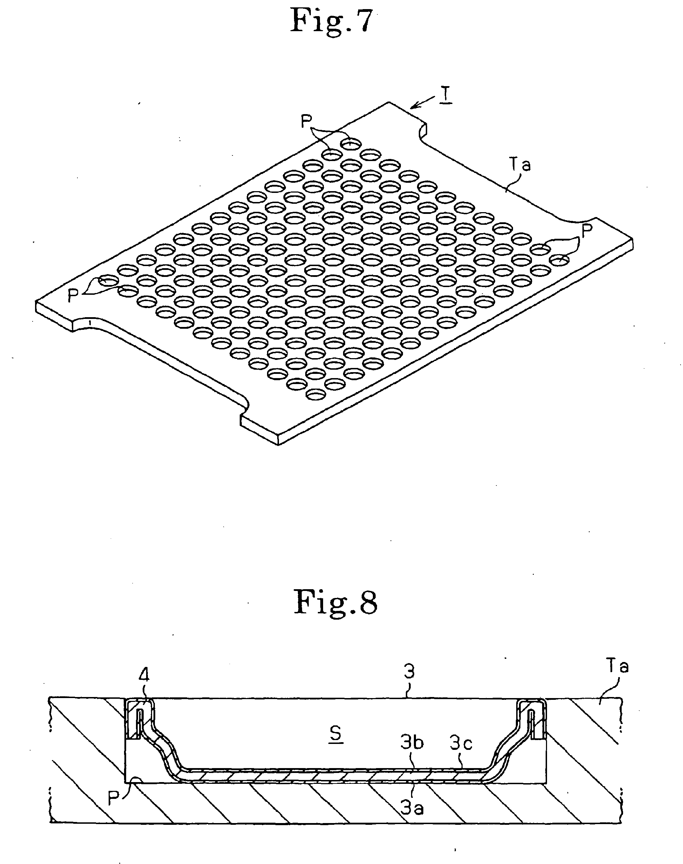

In the tray T, as shown in Fig. 7, a plurality of pockets P are concavely provided in a plate-like tray body Ta. In the embodiment, 14 pockets P are formed in a conveying direction, 12 pockets are formed in a direction perpendicular to the conveying direction, and 168 (=14x12) pockets are formed in total. In each of the pockets P of the tray T, a negative electrode can 3 is set, which is in a state before the plated-coating layer 3d is formed. The negative electrode can 3. as shown in Fig. 8, is disposed in the pocket P such that a concave S thereof is directed upward.

An etching apparatus 30 is provided on the base 21 and above the first conveyer C1, and a surface modification apparatus 40 is provided above the first conveyer C1 at a downstream side of the etching apparatus 30. Furthermore, an electroless plating apparatus 50 is provided on the base 21 and above the third conveyer C3.

During a process that the tray T is conveyed by the first to third conveyers C1, C2 and C3, the plurality of negative electrode cans 3 set on the tray T are subjected to etching treatment by the etching apparatus 30 (etching step), then subjected to surface modification treatment by the surface modification apparatus 40 (surface modification step), and then subjected to electroless plating treatment by the electroless plating apparatus 50 (electroless plating step), so that the plated-coating layer 3d is formed.

### (Etching apparatus 30)

The etching apparatus 30 has, from an upstream side to a downstream side, an etchant filling device 30a, an etchant recovery device 30b, a washing liquid filling device 30c, a washing liquid recovery device 30d, and a dryer 30e.

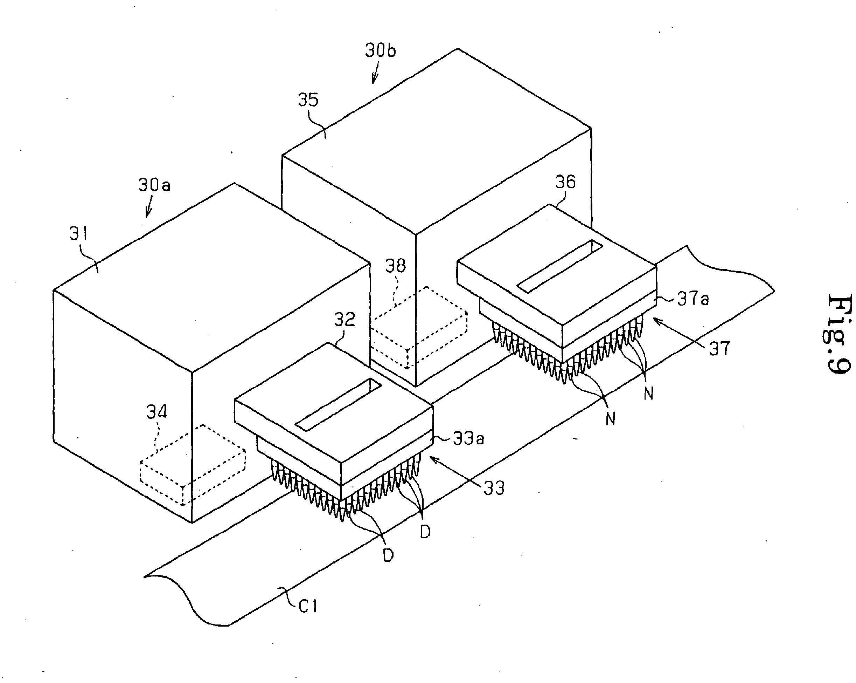

As shown in Fig. 9, in the etchant filling device 30a, a device body 31 is fixed to a top of the base 21 along the first conveyer C1. On the device body 31, a support arm 32 is formed in a manner of extending to a first conveyer C1 side. The support arm 32 supports an etchant filling unit 33 at a bottom side thereof in a vertically movable manner. The etchant filling unit 33 has a square-plate-shaped holder 33a having a plurality of dispensers D, and the holder 33a is supported by the support arm 32 via a not-shown vertical movement drive mechanism.

The plurality of dispensers D fixedly supported by the holder 33a are provided by a number (168) corresponding to the number of the pockets P provided on the tray T, and 14 provided on the holder 33a in the conveying direction of the first conveyer C1, and 12 in the direction perpendicular to the conveying direction. When the tray T is guided to a position directly below the etchant filling unit 33 by the first conveyer C1, respective negative electrode cans 3 disposed in the respective pockets P of the tray T are opposed to the corresponding dispensers D at the same time.

Each of the dispensers D in the etchant filling unit 33 is supplied with an etchant F1 stored in a not-shown tank provided in the device body 31 via a not-shown tube. The device body 31 has a controller 34 which controls the etchant filling unit 33 so as to control filling of the etchant F1 from each dispenser D into a concave S of the negative electrode can 3 disposed in the pocket P of the tray T.

Therefore, in the etchant filling device 30a, when the tray T is guided to the position directly below the etchant filling unit 33 by the first conveyer C1, the etchant F1 is filled from the dispensers D into the respective concave S of the negative electrode cans 3 disposed in the pockets P of the tray T at the same time, so that the inside of each of the concave S of the negative electrode cans 3 is chemically polished.

The etchant recovery device 30b is disposed at a downstream side of the etchant filling device 30a.

In the etchant recovery device 30b, a device body 35 is fixed to the top of the base 21 along the first conveyer C1. On the device body 35, a support arm 36 is formed in a manner of extending to the first conveyer C1 side. The support arm 36 supports an etchant recovery unit 37 at a bottom side thereof in a vertically movable manner. The etchant recovery unit 37 has a square-plate-shaped holder 37a having a plurality of aspirating nozzles N, and the holder 37a is supported by the support arm 36 via a not-shown vertical movement drive mechanism.

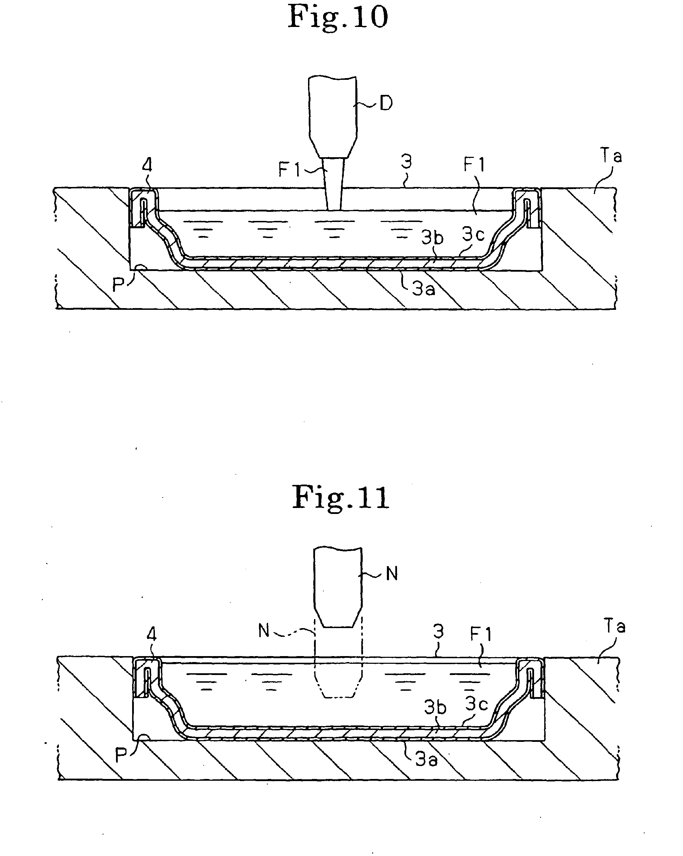

The plurality of aspirating nozzles N fixedly supported by the holder 37a are provided by a number (168) corresponding to the number of the pockets P provided on the tray T, and 14 are provided on the holder 37a in the conveying direction of the first conveyer C1, and 12 in the direction perpendicular to the conveying direction. When the tray T is guided to a position directly below the etchant recovery unit 37 by the first conveyer C1, respective negative electrode cans 3 disposed in the respective pockets P of the tray T are opposed to the corresponding aspirating nozzles N at the same time. The etchant recovery unit 37 vertically moves to be transferred between an aspirating position, which is extended into the negative electrode cans 3 as shown by a two-dot chain line in Fig. 11, for aspiration of the etchant F1 by a tip of the aspirating nozzle N, the etchant being supplied into the concave S of the negative electrode can 3, and a withdrawing position as shown by a solid line in Fig. 11, at which the nozzle does not disturb conveyance of the tray T.

Each of the aspirating nozzles N in the etchant recovery unit 37 discharges the aspirated etchant F1 into the tank of the etchant filling device 30a via a not-shown tube. The device body 35 has a controller 38 which controls the etchant recovery unit 37 so as to aspirate the etchant F1 filled from each aspirating nozzle N into the negative electrode can 3 disposed in the pocket P of the tray T.

Therefore, in the etchant recovery device 30b, when the tray T is guided to the position directly below the etchant recovery unit 37 by the first conveyer C1, the negative electrode cans 3 disposed in the respective pockets P of the tray T are set as objects, and the etchant F1 filled in the concave S of the negative electrode cans 3 is simultaneously aspirated through the aspirating nozzles N, so that the etchant F1 is recovered from the respective concave S of the negative electrode cans 3 into the tank.

The washing liquid filling device 30c is disposed at a downstream side of the etchant recovery device 30b.

The washing liquid filling device 30c is different from the etchant filling device 30a only in that while the etchant F1 is filled into the respective negative electrode cans 3 in the etchant filling device 30a, a washing liquid W including pure water is filled into the respective concave S of the negative electrode cans 3 in the device 30c, and is the same in other configurations as the etchant filling device 30a. Therefore, description of the washing liquid filling device 30c is omitted for convenience of description.

Therefore, in the washing liquid filling device 30c, when the tray T is guided by the first conveyer C1, the washing liquid W is simultaneously filled into the concave S of the negative electrode cans 3 disposed in the respective pockets P of the tray T, so that the inside of each of the concave S of the negative electrode cans 3 is washed.

The washing liquid recovery device 30d is disposed at a downstream side of the washing liquid filling device 30c. The washing liquid recovery device 30d is different from the etchant recovery device 30b only in that while the etchant F1 filled in the respective concave S of the negative electrode cans 3 is aspirated in the etchant recovery device 30b, the washing liquid W filled in the respective concave S of the negative electrode cans 3 is aspirated in the device 30d, and is the same in other configurations as the etchant recovery device 30b. Therefore, description of the washing liquid recovery device 30d is omitted for convenience of description.

Therefore, in the washing liquid recovery device 30d, when the tray T is guided by the first conveyer C1, the negative electrode cans 3 disposed in the respective pockets P of the tray T are set as objects, and the washing liquid W filled in the concave S of the negative electrode cans 3 is simultaneously aspirated, so that the washing liquid W are recovered from the respective concave S of the negative electrode cans 3 into a not-shown tank.

The dryer 30e is disposed at a downstream side of the washing liquid recovery device 30d. The dryer 30e is different from the etchant filling device 30a only in that while the etchant F1 is filled into the respective concave S of the negative electrode cans 3 in the etchant filling device 30a, air A is filled into the respective concave S of the negative electrode cans 3, and is essentially the same in other configurations as the etchant filling device 30a. Therefore, description of the dryer 30e is omitted for convenience of description.

Therefore, in the dryer 30e, when the tray T is guided by the first conveyer C1, the negative electrode cans 3 disposed in the respective pockets P of the tray T are set as objects, and the air A is simultaneously filled into the respective concave S of the negative electrode cans 3, so that the inside of each of the concave S of the negative electrode cans 3 is promptly dried by the filled air A.

### (Surface modification apparatus 40)

As shown in Fig. 6, the surface modification apparatus 40 has, from an upstream side to a downstream side, a surface-modification-liquid filling device 40a, a surface-modification-liquid recovery device 40b, a washing liquid filling device 40c, a washing liquid recovery device 40d, and a dryer 40e.

In the embodiment, since the surface modification apparatus 40 is different from the etching apparatus 30, in which the etchant F1 is treated, only in that a conductive polymer liquid F2 as a surface modification liquid is treated, the surface-modification-liquid filling device 40a is made to be the same in configuration as the etchant filling device 30a, and the surface-modification-liquid recovery device 40b is made to be the same in configuration as the etchant recovery device 30b. Moreover, the washing liquid filling device 40c, washing liquid recovery device 40d, and dryer 40e of the surface modification apparatus 40 are made to be the same in configuration as the washing liquid filling device 30c, washing liquid recovery device 30d, and dryer 30e of the etching apparatus 30 respectively.

Therefore, description of the surface modification apparatus 40 is omitted for convenience of description.

### (Electroless plating apparatus 50)

As shown in Fig. 6, the electroless plating apparatus 50 has, from an upstream side to a downstream side, an electroless-plating-liquid filling device 50a, an electroless-plating-liquid recovery device 50b, a washing liquid filling device 50c, a washing liquid recovery device 50d, and a dryer 50e.

In the embodiment, since the electroless plating apparatus 50 is different from the etching apparatus 30, in which the etchant F1 is treated, only in that a plating liquid F3 is treated, the electroless-plating-liquid filling device 50a is made to be the same in configuration as the etchant filling device 30a, and the electroless-plating-liquid recovery device 50b is made to be the same in configuration as the etchant recovery device 30b. Moreover, the washing liquid filling device 50c, washing liquid recovery device 50d, and dryer 50e of the electroless plating apparatus 50 are made to be the same in configuration as the washing liquid filling device 30c, washing liquid recovery device 30d, and dryer 30e of the etching apparatus 30 respectively.

Therefore, description of the electroless plating apparatus 50 is omitted for convenience of description.

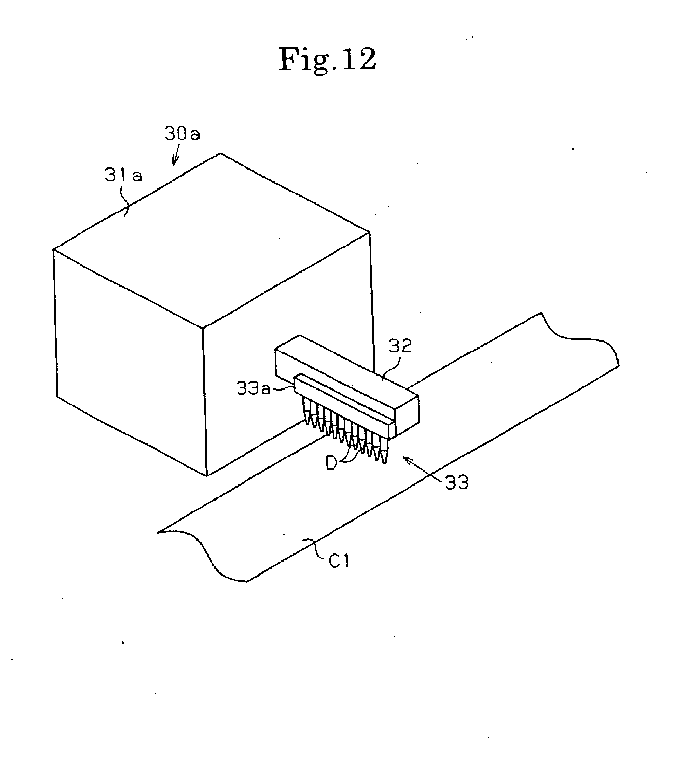

For example, in the etchant filling device 30a, the etchant filling unit 33 was designed such that the dispensers D were provided by the number (168) corresponding to the number of the pockets P provided in the tray T, so that the etchant F1 was able to be simultaneously filled into the respective concave S of the negative electrode cans 3 on the tray T. On the contrary, it is acceptable that 12 dispensers D are provided on a holder 33a in a direction perpendicular to a conveyance direction, and the etchant F1 is filled in turn for each row of concave S of negative electrode cans 3, as shown in Fig. 12.

It will be appreciated that a configuration as shown in Fig. 12 is not limitedly applied to the etchant filling device 30a, and may be applied to other filling devices, recovery devices, and dryers.

### Example 1

An SR626SW cell having a structure as shown in Fig. 1 was produced as example 1.

A three-layer clad material 0.2 mm thick of an outer surface layer 3a including a nickel layer, a metal layer 3b including an SUS304 stainless steel layer, and a collector layer 3c including copper was pressed so as to form a negative electrode can 3 having a folding-back strip 4a and a folding-back bottom 4b.

An etchant F1 containing 8% sulfuric acid in a concentration of 98% and a 8% hydrogen peroxide solution in a concentration of 35% was filled into a concave S of the negative-electrode can 3 to chemically polish a surface of the collector layer 3c of the negative electrode can 3, and then the surface is washed. Then, while draining (drying) was not performed, a conductive polymer liquid F2 containing polyaniline as a main component was filled into the recess in a subsequent step, and then washing and draining (including drying) were performed. At that time, the conductive polymer liquid F2 was not recovered. Finally, an electroless plating liquid F3 was filled into the recess, then the plating liquid F3 was recovered, and washing and draining (including drying) were performed, and then a plated-coating layer 3d including tin was formed, and consequently a negative electrode can 3 was produced.

On the other hand, an alkaline electrolyte including a sodium hydroxide solution in a concentration of 30% was filled into the recess, then a pellet including a positive electrode mixture 7 being molded in a disk shape was inserted into the positive electrode can 2, so that the alkaline electrolyte was absorbed by the positive electrode mixture 7.

A separator 8, which was punched in a circular form, in a three-layer structure of nonwoven cloth, cellophane, and a graft-polymerized polyethylene film, was loaded on the pellet of the positive electrode mixture 7. Then, the alkaline electrolyte including the sodium hydroxide solution in the concentration of 30% was dropped onto the separator 8 to be impregnated into the separator.

A gel-shaped negative electrode mixture 9, including zinc alloy powder containing aluminum without containing mercury, indium, and bismuth, zinc oxide, a thickener, sodium hydroxide, potassium hydroxide, and water was set on the separator 8, then the negative electrode can 3 was inserted into an open edge of the positive electrode can 2 via a ring-shaped polyamide gasket 5 including polyamide 66 coated with a polyamide sealant, and then the can 3 was caulked to the positive electrode can 2 from the open edge so as to be closed, thereby an alkaline cell was produced.

### Example 2

In example 2, a washing liquid recovery step (including a drying step) was added after the washing step performed after the etchant F1 was filled into the concave S of the negative electrode can 3. Other production conditions were the same as in the example 1.

### Example 3

In example 3, after the conductive polymer liquid F2 was filled into the concave S of the negative electrode can 3, a surface-modification-liquid recovery step of recovering the conductive polymer liquid F2 was added before performing the washing step and the washing liquid recovery step (including a drying step). Other production conditions were the same as in the example 1.

### Example 4

In example 4, a draining (including drying) step (washing liquid recovery and drying step) in the etching step of treating the collector of the negative electrode can 3, and a surface-modification-liquid recovery step of recovering the conductive polymer liquid F2 in the surface modification step were added. Other production conditions were the same as in the example 1.

### Example 5

In example 5, a mixed solution of 8% sulfuric acid in a concentration of 98% and 1% nitric acid in a concentration of 98% was used as the etchant F1. Other production conditions were the same as in the example 1.

### Example 6

In example 6, the electroless plating liquid F3 was prepared for electroless indium plating. Other production conditions were the same as in the example 1.

### Comparative example 1

In comparative example 1, the washing step after filling the etchant F1, that is, the washing step in the etching step was omitted. Other production conditions were the same as in the example 1.

### Comparative example 2

In comparative example 2, the draining (including drying) step (washing liquid recovery and drying step) after filling the conductive polymer liquid F2 was omitted. Other production conditions were the same as in the example 1.

### Comparative example 3

In comparative example 3, the washing and draining (including drying) steps after filling the conductive polymer liquid F2, that is, in the surface modification step was omitted. Other production conditions were the same as in the example 1.

### Comparative example 4

In comparative example 4, the draining (including drying) step (washing liquid recovery and drying step) after filling the electroless plating liquid F3 containing tin, that is, in the electroless plating step was omitted. Other production conditions were the same as in the example 1.

### Comparative example 5

In comparative example 5, the washing step and the draining (including drying) step (washing liquid recovery and drying step) after filling the electroless plating liquid F3 containing tin, that is, in the electroless plating step were omitted. Other production conditions were the same as in the example 1.

### Comparative example 6

In comparative example 6, the plating liquid recovery step after filling the electroless plating liquid F3 containing tin, that is, in the electroless plating step was omitted. Other production conditions were the same as in the example 1.

### Comparative example 7

In comparative example 7, all the steps in the etching step were omitted. Other production conditions were the same as in the example 1.

### Comparative example 8

In comparative example 8, all the steps in the surface modification step were omitted. Other production conditions were the same as in the example 1.

### Comparative example 9

In comparative example 9, all the steps in the etching and surface modification steps were omitted. Other production conditions were the same as in the example 1.

200 cells were produced in each of the examples 1 to 6 and comparative examples 1 to 9. Among the 200 cells, 100 cells were stored at a severe environment of temperature of 45°C and relative humidity of 93%, and occurrence of liquid leakage after storing the cells for respective 80 days and 100 days was evaluated. Results of evaluation are shown in Table 1. Moreover, each of the other 100 cells were stored for 100 days at an environment of 60°C and relative humidity of 0%, then discharged at a constant resistance of 30 kΩ, and when 1.2 V is assumed as a cutoff voltage, discharge capacity (mAh) is also shown in Table 1. In each of the cells, initial discharge capacity was 28 mAh.

First, when the example 1 is compared to the comparative example 1 using the Table 1, it is known that a treatment method of the negative electrode can 3 has the washing step after the etchant F1 has been filled in the etching step, at least the washing step and the draining step (including drying step) (washing liquid recovery and drying step) after the conductive polymer liquid F2 has been filled in the surface modification step, and at least the recovery step of the plating liquid F3, washing step, and draining step (including drying step) after the plating liquid F3 has been filled in the electroless plating step, thereby liquid leakage resistance and capacity keeping are improved.

The reason for this is that in the example 1, since the etching step has the washing step after the etchant F1 has been filled, the etchant F1 is perfectly removed, which can prevent a phenomenon that the residue of the etchant F1 reacts with the conductive polymer liquid F2 in the subsequent step, leading to degradation in quality of the plated-coating layer 3d.

Next, when the example 1 is compared to the comparative example 2 using the Table 1, it is known that a treatment method of the negative electrode can 3 has the washing step after the etchant F1 has been filled in the etching step, at least the washing step and the draining step (including drying step) (washing liquid recovery and drying step) after the conductive polymer liquid F2 has been filled in the surface modification step, and at least the plating liquid recovery step, washing step, and draining step (including drying step) (washing liquid recovery and drying step) after the electroless plating liquid F3 has been filled in the electroless plating step, thereby liquid leakage resistance and capacity keeping are improved.

The reason for this is that in the example 1, since the surface modification step has the draining step (washing liquid recovery step) after the conductive polymer liquid F2 has been filled, water is removed, which can prevent a phenomenon that the plating liquid F3 is diluted by the remained water in the subsequent step, leading to degradation in quality of the plated-coating layer 3d.

Next, when the example 1 is compared to the comparative example 3 using the Table 1, it is known that a treatment method of the negative electrode can 3 has at least the washing step after the etchant F1 has been filled in the etching step, and at least the washing step and the draining step (including drying step) (washing liquid recovery and drying step) after the conductive polymer liquid F2 has been filled in the surface modification step, thereby liquid leakage resistance and capacity keeping can be improved.

The reason for this is that in the example 1, it can be prevented that the residue of the conductive polymer liquid F2 in the surface modification step reacts with the plating liquid F3 in the subsequent step, leading to degradation in quality of the plated-coating layer 3d.

Next, when the example 1 is compared to the comparative example 4 using the Table 1, it is known that a treatment method of the negative electrode can 3 has at least the washing step and the draining step (including drying step) (washing liquid recovery and drying step) after the etchant F1 has been filled in the etching step, at least the washing step and the draining step (including drying step) (washing liquid recovery and drying step) after the conductive polymer liquid F2 has been filled in the surface modification step, and at least the recovery step of the plating liquid F3, washing step, and draining step (including drying step) (washing liquid recovery and drying step) after the plating liquid F3 has been filled in the electroless plating step, thereby liquid leakage resistance and capacity keeping can be improved.

The reason for this is that in the example 1, since the electroless plating step has the draining step (washing liquid recovery step) after the plating liquid F3 has been filled, water is removed, and thereby a bad effect such as water stain occurring in the plated-coating layer 3d can be prevented.

Next, when the example 1 is compared to the comparative example 5 using the Table 1, it is known that a treatment method of the negative electrode can 3 has at least the washing step after the etchant F1 has been filled in the etching step, at least the washing step and the draining (including drying) step (washing liquid recovery and drying step) after the conductive polymer liquid F2 has been filled in the surface modification step, and at least the recovery step of the plating liquid F3, washing step, and draining (including drying) step (washing liquid recovery and drying step) after the plating liquid F3 has been filled in the electroless plating step, thereby liquid leakage resistance and capacity keeping can be improved.

The reason for this is that in the example 1, since the electroless plating step has the washing step and the draining step after the plating liquid F3 has been filled, it can be prevented that concentration of the plating liquid F3 is increased compared with an appropriate concentration due to evaporation of water in the plating liquid F3, leading to reduction in uniformity and tightness of the plated-coating layer 3d, and can be prevented that a bad effect such as water stain occurs in the plated-coating layer 3d.

Next, when the example 1 is compared to the comparative example 6 using the Table 1, it is known that a treatment method of the negative electrode can 3 has at least the washing step after the etchant F1 has been filled in the etching step, at least the washing step and the draining step (including drying step) after the conductive polymer liquid F2 has been filled in the surface modification step, and at least the recovery step of the plating liquid F3, washing step, and draining step (including drying step) after the plating liquid F3 has been filled in the electroless plating step, thereby liquid leakage resistance and capacity keeping can be improved.

The reason for this is that in the example 1, since the electroless plating step has the recovery step of a plating liquid F3 after the plating liquid F3 has been filled, it can be prevented that the plating liquid F3 is diluted by a washing liquid W during washing in a subsequent step, and an uppermost surface is plated by such a diluted plating liquid F3, leading to reduction in tightness of a plated-coating layer 3d on the uppermost surface.

Next, when the example 1 is compared to the comparative example 7 using the Table 1, it is known that a treatment method of the negative electrode can 3 has at least the washing step after the etchant F1 has been filled in the etching step, at least the washing step and the draining step (including drying step) after the conductive polymer liquid F2 has been filled in the surface modification step, and at least the recovery step of the plating liquid F3, washing step, and draining step (including drying step) after the plating liquid F3 has been filled in the electroless plating step, thereby liquid leakage resistance and capacity keeping can be improved.

The reason for this is that in the example 1, since the an etching step using an acid is provided, impurities can be removed as a result of chemical polishing by the acid, the impurities being adhered on a copper surface when a clad material as a material of the negative electrode can 3 is produced by rolling, which prevents defects such as a pinhole or crack in the plated-coating layer 3d caused by adhesion of the impurities, consequently a plated-coating layer 3d having few defects can be formed.

Next, when the example 1 is compared to the comparative example 8 using the Table 1, it is known that the etching step has at least the washing step after the etchant F1 has been filled, the surface modification step has at least the washing step and the draining (including drying) step (washing liquid recovery and drying step) after the conductive polymer liquid F2 has been filled, and the electroless plating step has at least the recovery step of the plating liquid F3, washing step, and draining (including drying) step (washing liquid recovery and drying step) after the plating liquid F3 has been filled, thereby liquid leakage resistance and capacity keeping can be improved.

The reason for this is as follows. That is, in the example 1, when surface treatment of the negative electrode can 3 is performed using the conductive polymer liquid F2 such as polyaniline in the surface modification step, a plated-coating layer 3d can be formed, which has a uniform thickness, but has no defect such as pinhole and crack. As a mechanism for this, when a surface of a copper layer (collector layer 3c) of the negative electrode can 3 is treated by the conductive polymer liquid F2, only Cu⁺ ions (monovalent copper ions) exist on the surface, so that a uniform plated-coating layer 3d having no defect is formed (when the surface of the copper layer (collector layer 3c) of the negative electrode can 3 is not treated by the conductive polymer liquid F2, Cu⁺ ions and Cu²⁺ ions randomly exist on the surface of the copper layer, which inhibits formation of a uniform plated-coating layer 3d).

Next, when the example 1 is compared to the comparative example 9 using the Table 1, it is known that the etching step has at least the washing step after the etchant F1 has been filled, the surface modification step has at least the washing step and the draining (including drying) step (washing liquid recovery and drying step) after the conductive polymer liquid F2 has been filled, and the electroless plating step has at least the recovery step of the plating liquid F3, washing step, and draining (including drying) step (washing liquid recovery and drying step) after the plating liquid F3 has been filled, thereby liquid leakage resistance and capacity keeping can be improved.

This is because of the same reasons as in the comparative examples 7 and 8.

Next, when the example 1 is compared to the example 5 using the Table 1, it is known that the etchant F1 contains at least one acid, thereby liquid leakage resistance and capacity keeping can be improved.

The reason for this is that impurities, which are adhered on a copper surface (collector layer 3c surface) when a clad material as a material of the negative electrode can 3 is produced by rolling, or impurities, which are adhered on the collector layer 3c surface (copper surface) of the negative electrode can 3 from a die or the like when the negative electrode can 3 is molded by pressing, can be removed by a chemical polishing effect given by the acid, therefore defects such as a pinhole or crack in the plated-coating layer 3d caused by adhesion of the impurities are prevented, consequently a plated-coating layer 3d having few defects can be formed.

Finally, when the example 1 is compared to the example 6 using the Table 1, it is known that the plating liquid F3 contains at least tin or indium, thereby liquid leakage resistance and capacity keeping can be improved.

The reason for this is that each of tin and indium easily forms a uniform and tight plated-coating layer 3d on the copper surface (collector layer 3c surface), and has a large.effect (hydrogen overvoltage) of inhibiting hydrogen gas generated by contact of zinc as a negative electrode active-material to the collector of the negative electrode can.

According to the invention, since the plated-coating layer 3d is formed in the concave S of the negative electrode can 3, the layer 3d having no pinhole, no crack, and no defect caused by impurities or the like, in addition, including the metal having a large hydrogen overvoltage compared with copper, corrosion of zinc as the negative electrode active-material can be inhibited, and resistance to liquid leakage due to a creep phenomenon of an alkaline electrolyte can be improved. By using the invention, a good alkaline cell can be obtained without using mercury.

Next, advantages of the embodiment configured as above are described below.

(1) According to the embodiment, the electroless plating liquid F3 is filled into the concave S, so that the plated-coating layer 3d is formed only in the concave S, but not formed in other areas. Therefore, useful and efficient plating can be achieved.

In addition, since the plated-coating layer 3d, on which the alkaline electrolyte easily creeps up compared with on the collector layer 3c, is formed only in the concave S, it can be prevented that the alkaline electrolyte creeps up by a creep phenomenon between the gasket 5 and the negative electrode can 3, consequently liquid leakage resistance can be improved.

Furthermore, since the plated-coating layer 3d including Sn or indium being a metal having a high hydrogen overvoltage compared with copper is formed on the collector layer 3c including copper formed in the concave S of the negative electrode can 3, generation of hydrogen gas, which is caused by contact of zinc as the negative electrode active-material to the collector layer 3c of the negative electrode can 3, is securely inhibited.

(2) According to the embodiment, the etching step is performed before the electroless plating step and the surface modification step. Therefore, a surface of the concave S (collector layer 3c surface) is chemically polished in the etching step, so that impurities, which are adhered on the surface when the clad material as a material of the negative electrode can 3 is produced by rolling, or impurities, which are adhered on the negative electrode can 3 from a die or the like (collector layer 3c) when the negative electrode can 3 is molded by pressing, are removed, thereby defects such as a pinhole or crack in the plated-coating layer 3d caused by adhesion of the impurities are prevented, consequently a plated-coating layer having few defects can be formed.

(3) According to the embodiment, the surface modification step is performed after the etching·step, and before the electroless plating step. Therefore, in the surface modification step, a surface of the concave S (collector layer 3c), from which impurities have been removed in the etching step, is modified to facilitate plating for forming a uniform plated-coating layer 3d in a subsequent step (electroless plating step).

(4) According to the embodiment, in the electroless plating step, after the electroless plating liquid F3 filled into the concave S is recovered, the concave S is washed. Therefore, the electroless plating liquid F3 is not diluted by the washing liquid W. As a result, when the electroless plating liquid F3 is reused, reduction in tightness of the plated-coating layer 3d, which may occur when the layer 3d is formed by using a diluted electroless plating liquid F3, does not occur.

(5) According to the embodiment, in the electroless plating step, since recovery of the washing liquid W and drying are promptly performed after washing, liquid stain (water stain) or the like does not occur in the plated-coating layer 3d.

(6) According to the embodiment, since the electroless plating apparatus 50 uses a plurality of dispensers D to fill the electroless plating liquid F3 into respective concave S of corresponding negative electrode cans 3 disposed in respective pockets P of the tray T, a large number of negative electrode cans 3 can be made to have a plated-coating layer 3d only in the concave S respectively, in addition, decrease in consumption of the electroless plating liquid F3 can be achieved.

Furthermore, in the electroless plating apparatus 50, since a plurality of aspirating nozzles N are used to aspirate the electroless plating liquid F3 from the respective concave S of the corresponding negative electrode cans 3 disposed in the respective pockets P of the tray T, the electroless plating liquid F3 can be efficiently recovered.

(7) According to the embodiment, in the etching apparatus 30, since a plurality of dispensers D are used to fill the etchant F1 into respective concave S of corresponding negative electrode cans 3 disposed in respective pockets P of the tray T, a large number of negative electrode cans 3 can be chemically polished only in the concave S thereof, in addition, decrease in consumption of the etchant F1 can be achieved.

Furthermore, in the etching apparatus 30, since a plurality of aspirating nozzles N are used to aspirate the etchant F1 from respective concave S of corresponding negative electrode cans 3 disposed in the respective pockets P of the tray T, the etchant F1 can be efficiently recovered.

(8) According to the embodiment, in the surface modification apparatus 40, since a plurality of dispensers D are used to fill the conductive polymer liquid F2 into respective concave S of corresponding negative electrode cans 3 disposed in respective pockets P of the tray T, a large number of negative electrode cans 3 can be subjected to surface modification only in the concave S thereof, in addition, decrease in consumption of the conductive polymer liquid F2 can be achieved.

Furthermore, in the surface modification apparatus 40, since a plurality of aspirating nozzles N are used to aspirate the conductive polymer liquid F2 from respective concave S of corresponding negative electrode cans 3 disposed in the respective pockets P of the tray T, the conductive polymer liquid F2 can be efficiently recovered.

(9) According to the embodiment, in each of the etching apparatus 30, the surface modification apparatus 40, and the electroless plating apparatus 50, since a plurality of dispensers D are used to fill the washing liquid W into respective concave S of corresponding negative electrode cans 3 disposed in respective pockets P of the tray T, a large number of negative electrode cans 3 can be washed only in the concave S thereof, in addition, decrease in consumption of the washing liquid W can be achieved.

Furthermore, since a plurality of aspirating nozzles N are used to aspirate the washing liquid W from respective concave S of corresponding negative electrode cans 3 disposed in the respective pockets P of the tray T, the washing liquid W can be efficiently recovered.

(10) According to the embodiment, in each of the etching apparatus 30, surface modification apparatus 40, and electroless plating apparatus 50, since a plurality of dispensers D are used to fill air A into washed concave S of corresponding negative electrode cans 3 respectively, the cans 3 being disposed in the respective pockets P of the tray T, a large number of negative electrode cans 3 can be efficiently dried only in the concave S thereof.

Moreover, it will be appreciated that the invention is not limited to the embodiment, but can take various other configurations without departing the scope of the invention.

In the embodiment, the invention was specified for plating of the negative electrode can 3 as an electrode can of the flat alkali primary cell 1, the invention is not limited to this, and may be applied to plating of the positive electrode can 2 of the flat alkali primary cell 1.

In the embodiment, the invention was specified in order to form the plated-coating layer 3d for inhibiting generation of hydrogen gas. However, the invention may be applied to plating of the concave S of the negative electrode can 3 for a purpose other than inhibition of hydrogen gas generation.

In the embodiment, the washing step was performed in a way that the washing liquid W was filled into the concave S of each negative electrode can 3 in the electroless plating step. However, the washing step may be performed in a way that a large number of negative electrode cans 3 disposed on the tray T are dipped in a washing chamber to be washed. The reason for this is that since subsequent steps only include the draining step (washing liquid recovery step) and the drying step, respective negative electrode cans 3 may be massively treated while being disposed on the tray T without any significant hindrance even if they are not subjected to the subsequent steps.

The aforegoing description has been given by way of example only and it will be appreciated by a person skilled in the art that modifications can be made without departing from the scope of the present invention, which is defined by the claims.

**Table 1**

| | Etching step | | | Surface modification step | | | Electroless plating step | | | | Occurrence of liquid leakage % | | Discharge capacity mAh |
|---|---|---|---|---|---|---|---|---|---|---|---|---|---|
| | acid | washing | draining | recovery | washing | draining | kind | recovery | washing | draining | 80 days | 100 days | |
| Example 1 | Sulfuric acid + Hydrogen peroxide | Done | Not done | Not done | Done | Done | Sn | Done | Done | Done | 0 | 0 | 23.5 |
| Example 2 | Hydrogen peroxide Hydrogen peroxide | Done | Done | Not done | Done | Done | Sn | Done | Done | Done | 0 | 0 | 23.4 |
| Example 3 | Sulfuric acid + Hydrogen peroxide | Done | Not done | Done | Done | Done | Sn | Done | Done | Done | 0 | 0 | 23.2 |
| Example 4 | Sulfuric acid + Hydrogen peroxide | Done | Done | Done | Done | Done | Sn | Done | Done | Done | 0 | 0 | 23.3 |
| Example 5 | Sulfuric acid + nitric acid | Done | Not done | Not done | Done | Done | Sn | Done | Done | Done | 0 | 0 | 23.2 |
| Example 6 | Sulfuric acid + Hydrogen peroxide | Done | Not done | Not done | Done | Done | In | Done | Done | Done | 0 | 0 | 23.2 |
| Comparative example 1 | Sulfuric acid + Hydrogen peroxide | Not done | Not done | Not done | Done | Done | Sn | Done | Done | Done | 4 | 9 | 22.5 |
| Comparative example 2 | Sulfuric acid + Hydrogen peroxide | Done | Not done | Not done | Done | Not done | Sn | Done | Done | Done | 3 | 8 | 22.7 |
| Comparative example 3 | Sulfuric acid + Hydrogen peroxide | Done | Not done | Not done | Not done | Not done | Sn | Done | Done | Done | 2 | 4 | 22.3 |
| Comparative example 4 | Sulfuric acid + Hydrogen peroxide | Done | Not done | Not done | Done | Done | Sn | Done | Done | Not done | 2 | 5 | 21.9 |
| Comparative example 5 | Sulfuric acid + Hydrogen peroxide | Done | Not done | Not done | Done | Done | Sn | Done | Not done | Not done | 5 | 11 | 20.8 |
| Comparative example 6 | Sulfuric acid + Hydrogen peroxide | Done | Not done | Not done | Done | Done | Sn | Not done | Done | Done | 3 | 10 | 20.7 |
| Comparative example 7 | - | - | - | Not done | Done | Done | Sn | Done | Done | Done | 5 | 12 | 20.8 |
| Comparative example 8 | Sulfuric acid + Hydrogen peroxide | Done | Not done | - | - | - | Sn | Done | Done | Done | 7 | 15 | 20.5 |
| Comparative example 9 | - | - | - | - | - | - | Sn | Done | Done | Done | 12 | 25 | 19.8 |

## Claims

1. A method of manufacturing an electrode can of a flat alkaline cell, comprising:
filling an etchant into a concave of the electrode can;
washing the concave after filling the etchant;
filling a surface modification liquid into the concave of the electrode can;
washing the concave by using a washing liquid after filling the surface modification liquid;
recovering the washing liquid from the concave after the washing;
drying the concave after recovering the washing liquid;
filling a plating liquid into the concave of the electrode can;
forming a plated-coating layer on an inner face of the concave by plating;
recovering the filled plating liquid from the concave of the electrode can;
washing the concave by using a washing liquid after recovering the plating liquid;
recovering the washing liquid from the concave after the washing; and
drying the concave after recovering the washing liquid.

2. The method of manufacturing an electrode can of a flat alkaline cell according to claim 1:
wherein the etchant contains at least one acid.

3. The method of manufacturing an electrode can of a flat alkaline cell according to any one of the preceding claims,
wherein the electrode can includes a three-layer clad material of an outer surface layer including nickel, a metal layer including stainless steel, and a collector layer including copper, the clad material being pressed into a cup shape with the collector layer being at an inner side; and
the plated-coating layer is formed on the collector layer on an inner face of the concave in the cup shape.

4. The method of manufacturing an electrode can of a flat alkaline cell according to any one of the preceding claims,
wherein the plating liquid contains at least tin or indium.

5. An apparatus for plating an electrode can of a flat alkaline cell, comprising:
a tray for disposing a plurality of electrode cans;
a plurality of dispensers filling an etchant into a concave of each of the plurality of electrode cans in order to simultaneously chemically polish an inner face of each said concave of the plurality of electrode cans;
a plurality of dispensers filling a surface modification liquid into a concave of each of the plurality of electrode cans in order to simultaneously modify an inner face of each said concave of the plurality of electrode cans;
a plurality of dispensers filling a plating liquid into a concave of each of the plurality of electrode cans in order to simultaneously form a plated-coating layer on an inner face of each said concave of the plurality of electrode cans; and
a plurality of dispensers filling a washing liquid into a concave of each of the plurality of electrode cans in order to simultaneously wash an inner face of each said concave of the plurality of electrode cans.

6. The apparatus according to claim 5, further comprising:
a plurality of aspirating nozzles simultaneously aspirating the plating liquid from the plurality of electrode cans disposed on the tray.

7. The apparatus according to claim 5 or claim 6, further comprising:
a plurality of aspirating nozzles simultaneously aspirating the etchant from the plurality of electrode cans disposed on the tray.

8. The apparatus according to one of claims 5 to 7, further comprising:
a plurality of aspirating nozzles simultaneously aspirating the surface modification liquid from the plurality of electrode cans disposed on the tray.

9. The apparatus according to one of claims 5 to 8, further comprising:
a plurality of aspirating nozzles simultaneously aspirating the washing liquid from the plurality of electrode cans disposed on the tray.

## Patentansprüche

1. Verfahren zur Herstellung einer Elektrodenbüchse einer Alkali-Flachbatterie, umfassend:
Einfüllen eines Ätzmittels in einen Hohlraum der Elektrodenbüchse;
Waschen des Hohlraums nach dem Einfüllen des Ätzmittels;
Einfüllen einer Oberflächenmodifizierungsflüssigkeit in den Hohlraum der Elektrodenbüchse;
Waschen des Hohlraums nach dem Einfüllen der Oberflächenmodifizierungsflüssigkeit;
Wiedergewinnen der Waschflüssigkeit aus dem Hohlraum nach dem Waschen;
Trocknen des Hohlraumes nach dem Wiedergewinnen der Waschflüssigkeit;
Einfüllen einer Plattierflüssigkeit in den Hohlraum der Elektrodenbüchse;
Bilden einer plattierten Überzugsschicht an einer Innenfläche des Hohlraumes durch Plattieren;
Wiedergewinnen der eingefüllten Plattierflüssigkeit aus dem Hohlraum der Elektrodenbüchse;
Waschen des Hohlraumes durch Verwenden einer Waschflüssigkeit nach dem Wiedergewinnen der Plattierflüssigkeit;
Wiedergewinnen der Waschflüssigkeit aus dem Hohlraum nach dem Waschen; und
Trocknen des Hohlraumes nach dem Wiedergewinnen der Waschflüssigkeit.

2. Verfahren zur Herstellung einer Elektrodenbüchse einer Alkali-Flachbatterie nach Anspruch 1,
wobei das Ätzmittel zumindest eine Säure enthält.

3. Verfahren zur Herstellung einer Elektrodenbüchse einer Alkali-Flachbatterie nach einem der vorangehenden Ansprüche,
wobei die Elektrodenbüchse ein dreilagiges Hüllmaterial aus einer Außenflächenschicht, die Nickel enthält, einer Metallschicht, die rostfreien Stahl enthält, und einer Kollektorschicht, die Kupfer enthält, enthält, wobei das Hüllmaterial in eine Becherform gepresst wird, bei der sich die Kollektorschicht an einer Innenseite befindet; und
die plattierte Überzugsschicht an der Kollektorschicht an einer Innenfläche des Hohlraums in der Becherform gebildet ist.

4. Verfahren zur Herstellung einer Elektrodenbüchse einer Alkali-Flachbatterie nach einem der vorangehenden Ansprüche,
wobei die Plattierflüssigkeit zumindest Zinn oder Indium enthält.

5. Vorrichtung zum Plattieren einer Elektrodenbüchse einer Alkali-Flachbatterie, umfassend:
eine Schale zum Anordnen mehrerer Elektrodenbüchsen;
mehrere Spender, die ein Ätzmittel in einen Hohlraum jeder der mehreren Elektrodenbüchsen füllen, um gleichzeitig eine Innenfläche jedes Hohlraumes der mehreren Elektrodenbüchsen chemisch zu polieren;
mehrere Spender, die eine Oberflächenmodifizierungsflüssigkeit in einen Hohlraum jeder der mehreren Elektrodenbüchsen füllen, um gleichzeitig eine Innenfläche jedes Hohlraumes der mehreren Elektrodenbüchsen zu modifizieren;
mehrere Spender, die eine Plattierflüssigkeit in einen Hohlraum jeder der mehreren Elektrodenbüchsen füllen,
um gleichzeitig eine plattierte Überzugsschicht an einer Innenfläche jedes Hohlraumes der mehreren Elektrodenbüchsen zu bilden; und
mehrere Spender, die eine Waschflüssigkeit in einen Hohlraum jeder der mehreren Elektrodenbüchsen füllen, um gleichzeitig eine Innenfläche jedes Hohlraumes der mehreren Elektrodenbüchsen zu waschen.

6. Vorrichtung nach Anspruch 5, des Weiteren umfassend:
mehrere Ansaugdüsen, die gleichzeitig die Plattierflüssigkeit aus den mehreren Elektrodenbüchsen ansaugen, die auf der Schale angeordnet sind.

7. Vorrichtung nach Anspruch 5 oder Anspruch 6, des Weiteren umfassend:
mehrere Ansaugdüsen, die gleichzeitig das Ätzmittel aus den mehreren Elektrodenbüchsen ansaugen, die auf der Schale angeordnet sind.

8. Vorrichtung nach einem der Ansprüche 5 bis 7, des Weiteren umfassend:
mehrere Ansaugdüsen, die gleichzeitig die Oberflächenmodifizierungsflüssigkeit aus den mehreren Elektrodenbüchsen ansaugen, die auf der Schale angeordnet sind.

9. Vorrichtung nach einem der Ansprüche 5 bis 8, des Weiteren umfassend:
mehrere Ansaugdüsen, die gleichzeitig die Waschflüssigkeit aus den mehreren Elektrodenbüchsen ansaugen, die auf der Schale angeordnet sind.

## Revendications

1. Procédé de fabrication d'un bac d'électrode d'une pile alcaline plate, comprenant :
remplissage, avec un agent de gravure, d'un concave du bac d'électrode ;
lavage du concave après le remplissage avec l'agent de gravure ;
remplissage, avec un liquide de modification de surface, du concave du bac d'électrode;
lavage du concave en utilisant un liquide de lavage après le remplissage avec le liquide de modification de surface ;
récupération du liquide de lavage du concave après le lavage ;
séchage du concave après la récupération du liquide de lavage ;
remplissage, avec un liquide de métallisation, du concave du bac d'électrode ;
formation d'une couche de revêtement de placage sur une face interne du concave grâce à une métallisation ;
récupération du liquide de métallisation de remplissage du concave du bac d'électrode ;
lavage du concave en utilisant un liquide de lavage après la récupération du liquide de métallisation ;
récupération du liquide de lavage du concave après le lavage; et
séchage du concave après la récupération du liquide de lavage.

2. Procédé de fabrication d'un bac d'électrode d'une pile alcaline plate selon la revendication 1,
dans lequel l'agent de gravure contient au moins un acide.

3. Procédé de fabrication d'un bac d'électrode d'une pile alcaline plate selon l'une quelconque des revendications précédentes,
dans lequel le bac d'électrode comprend un matériau de placage à trois couches avec une couche de surface extérieure comprenant du nickel, une couche métallique comprenant de l'acier inoxydable, et une couche de collecteur comprenant du cuivre, le matériau de placage étant pressé en forme de cuvette avec la couche de collecteur se trouvant sur un côté intérieur ; et
la couche de revêtement de placage étant formée sur la couche de collecteur sur une face interne du concave en forme de cuvette.

4. Procédé de fabrication d'un bac d'électrode d'une pile alcaline plate selon l'une des revendications précédentes,
dans lequel le liquide de métallisation contient au moins de l'étain ou de l'indium.

5. Appareil de placage d'un bac d'électrode d'une pile alcaline plate, comprenant :
un plateau pour disposer une pluralité de bacs d'électrodes ;
une pluralité de distributeurs remplissant avec un agent de gravure un concave de chacun parmi la pluralité des bacs d'électrode afin de simultanément polir chimiquement une face interne de chacun desdits concaves de la pluralité des bacs d'électrode ;
une pluralité de distributeurs remplissant avec un liquide de modification de surface un concave de chacun parmi la pluralité des bacs d'électrode afin de simultanément modifier une face interne de chacun desdits concaves de la pluralité des bacs d'électrode;
une pluralité de distributeurs remplissant avec un liquide de métallisation un concave de chacun parmi la pluralité des bacs d'électrode afin de simultanément former une couche de revêtement de placage sur une face interne de chacun desdits concaves de la pluralité des bacs d'électrode ; et
une pluralité de distributeurs remplissant avec un liquide de lavage un concave de chacun parmi la pluralité des bacs d'électrode afin de simultanément laver une face interne de chacun desdits concaves de la pluralité des bacs d'électrode.

6. Appareil selon la revendication 5, comprenant par ailleurs :
une pluralité de buses d'aspiration aspirant simultanément le liquide de métallisation de la pluralité des bacs d'électrode disposés sur le plateau.

7. Appareil selon la revendication 5 ou la revendication 6, comprenant par ailleurs :
une pluralité de buses d'aspiration aspirant simultanément l'agent de gravure de la pluralité des bacs d'électrode disposés sur le plateau.

8. Appareil selon l'une des revendications 5 à 7, comprenant par ailleurs :
une pluralité de buses d'aspiration aspirant simultanément le liquide de modification de surface de la pluralité des bacs d'électrode disposés sur le plateau.

9. Appareil selon l'une des revendications 5 à 8, comprenant par ailleurs :
une pluralité de buses d'aspiration aspirant simultanément le liquide de lavage de la pluralité des bacs d'électrode disposés sur le plateau.
